# FASCICULE DE BREVET EUROPEEN

(11) **EP 2 496 487 B1**
(45) Date de publication et mention de la délivrance du brevet: **08.10.2014**
(21) Numéro de dépôt: 10787902.5
(22) Date de dépôt: 07.11.2010
(51) Int. Cl.: B65D 6/26, B65D 21/02, B65D 6/08, A47B 55/02

(54) **CORBEILLE PLIABLE EN FIL METALLIQUE**
KLAPPKORB AUS METALLDRAHT
COLLAPSIBLE BASKET MADE OF METAL WIRE

(30) Priorité: 07.11.2009 CH 17212009
(43) Date de publication de la demande: 12.09.2012
(73) Titulaire: ABRANE France SAS, 69390 VOURLES (FR)
(72) Inventeur: GUINE, Fabrice, CH-1092 Belmont-sur-Lausanne (CH); PINÇON, Jean-Noël, CH-1965 Drône (CH); GETTE, Christophe, CH-Sion (CH)
(74) Mandataire: reuteler & cie SA
(86) Numéro de dépôt international: PCT/IB2010/055051
(87) Numéro de publication internationale: WO 2011/055345

(56) Documents cités:
- EP-A1- 1 454 833
- DE-U1- 7 813 374
- GB-A- 2 300 219
- GB-A- 2 314 833
- NL-C2- 1 020 042
- US-A- 3 349 939
- US-B1- 6 691 382

## Description

La présente invention concerne des corbeilles en fil métallique, notamment des corbeilles utilisées dans des rayons de magasins pour la vente au détail de produits.

Certaines corbeilles connues sont formées de parois en fil métallique soudées ensemble afin de former un conteneur rigide. L'inconvénient est que ces conteneurs sont encombrants et donc coûteux à stocker et à transporter. Pour pallier à ces inconvénients, il existe des corbeilles en fil métallique formées d'éléments séparés assemblés avec des pièces de connexion en plastique tel que décrit dans GB 2 314 833 ou NL 1020042, ou pliable tel que décrit dans le EP 1 454 833. Un inconvénient majeur des corbeilles formés d'éléments séparés est que des éléments peuvent être omis ou perdus lors de la fabrication, stockage ou transport et l'assemblage des éléments est coûteux et sujet à des erreurs. Une corbeille pliable ne comportant pas d'éléments séparables permet d'éviter cet inconvénient. Dans EP 1454833 les parois latérales, arrière et avant de la corbeille sont montées de manière pivotante sur la paroi de fond, les pivots constitués par des cavaliers en U renversé sont soudés au cadre de la paroi de fond. Les cavaliers en U sont dimensionnés de sorte à permettre un certain jeu de déplacement des parois, notamment dans une direction orthogonale au plan de la paroi de fond pour permettre le montage et le verrouillage des parois. Le verrouillage de la corbeille en position montée est donc obtenu par un déplacement vertical descendant des parois arrière et avant afin d'engager leurs doigts de verrouillage dans des orifices de verrouillage complémentaires des parois latérales. Un inconvénient de ce système connu est le risque d'un déverrouillage accidentel ou involontaire. Un autre inconvénient est le jeu nécessaire pour le montage de la corbeille qui réduit sa stabilité et crée du bruit lors de la manutention ou de l'utilisation de la corbeille.

Au vu de ce qui précède, un but de l'invention est de fournir des corbeilles en fil métallique destinées à la présentation d'objets à la vente dans des rayons de magasin, peu volumineuses pour le transport et le stockage, faciles à monter, et stables dans leur position de montage

Il est avantageux de fournir une corbeille en fil métallique qui est très facile à monter.

Il est avantageux de fournir une corbeille en fil métallique qui est silencieux à utiliser.

Il est avantageux de fournir une corbeille en fil métallique qui est économe à fabriquer, à transporter et à stocker.

Des buts de l'invention sont réalisés par la corbeille selon la revendication 1.

Dans la présente invention, une corbeille pliable en fil métallique comprend une paroi de fond, deux parois latérales, une paroi arrière une paroi avant, et des moyens de fixation pour verrouiller les parois latérales aux parois avant et arrière en position montée. Chacune des parois comprend un cadre en fil métallique et une grille, les parois avant, arrière et latérales étant montées de manière pivotante à la paroi de fond. Les moyens de fixation comprennent des pièces de verrouillage rapportées, chacune des pièces de verrouillage comprenant une première partie de fixation avec un canal destinée à être enfilée sur une portion de cadre d'une paroi, et une deuxième partie de fixation comprenant des bras élastiques configurés pour pincer élastiquement une portion du fil du cadre de la paroi adjacente, les deux parties de fixation étant reliées solidairement. La pièce de verrouillage peut avantageusement être une pièce injectée en matière plastique thermodurcissable.

La surface intérieure d'une paroi formant le canal de la première partie de fixation comprend de préférence des protubérances et optionnellement des rainures ou dépressions au pied des protubérances, les protubérance étant configurées pour être écrasées lors du montage sur une portion de cadre, cela pour mieux résister au déplacement de l'élément de verrouillage après montage. La paroi formant le canal de la première partie de fixation peut en outre comprendre une ouverture pour permettre le fléchissement élastique de la paroi du canal.

La première partie de fixation peut avantageusement comprendre des moyens anti-rotation.

Dans une forme d'exécution avantageuse, les moyens anti-rotation peuvent être sous forme d'une extension destinée à se fixer sur un fil de la grille adjacente par une troisième partie de fixation relié solidairement à la première partie de fixation. La troisième partie de fixation comprend des bras élastiques ayant la forme d'un « C » avec un canal, configurés pour pincer élastiquement un fil de la grille. L'extension comprend de préférence des bras ayant une certaine élasticité pour améliorer l'élasticité de la pince en forme de « C ».

Dans une autre forme d'exécution, les moyens anti-rotation peuvent être sous forme d'extensions s'étendant généralement dans la direction de l'axe du canal en saillie par rapport à une extrémité supérieure du canal. Dans ce cas, il y a de préférence une paire d'extensions anti-rotation configurées pour être positionnées de part et d'autre d'une portion de fil du cadre orientée transversalement à l'axe du canal.

Le cadre de la paroi de fond comporte, sur chacun de ses quatre côtés, des pivots, ces pivots pouvant être sous forme de cavaliers en forme de U réalisés en fil métallique et dont les extrémités sont soudées au cadre. Les cavaliers sur les côtés avant et arrière du cadre s'étendent avantageusement dans une direction parallèle à la paroi de fond, alors que les cavaliers sur les côtés latéraux du cadre s'étendent dans une direction orthogonale à la paroi de fond, les parois avant et arrière étant configurées pour être rabattues contre la face inférieure de la paroi de fond et les parois latérales étant configurées pour être rabattues sur la surface supérieure de la paroi de fond. Les fils des grilles des parois avant et arrière sont soudés au cadre sur leurs faces intérieures et des fils de la grille de la paroi de fond sont soudés sur le cadre de la paroi de fond sur sa face supérieure. Le côté supérieur du cadre de la paroi arrière et le côté supérieur du cadre de la paroi avant ont des longueurs leur permettant de s'insérer dans le périmètre du cadre de la paroi de fond.

Avantageusement, la pièce de verrouillage rapportée permet d'éliminer le jeu entre les parois avant, arrière et latérales lors du verrouillage des parois en position montée. Le jeu réduit des pivots aide également à réaliser une corbeille plus stable, rigide et moins bruyante à l'utilisation que les corbeilles pliables conventionnelles.

Des buts de l'invention sont réalisés par la corbeille selon la revendication 6.

Afin de faciliter le montage des parois dans le bons sens, les côtés latéraux de la corbeille comprennent des éléments détrompeurs contraignant l'utilisateur à ne monter la corbeille dans un seul sens. L'élément détrompeur peut avantageusement être formé par une section de fil transversal de la paroi de fond qui se prolongent verticalement en déport du fil bas de la paroi de côté.

Cette excroissance peut aussi constituer un espace libérant une zone pour assurer le logement des pièces de verrouillage en position rabattue. Cet espace assure, en transport comme en stockage de longue durée, que les pièces de verrouillage ne soient pas en appui sur les fils latéraux de la paroi de fond.

Dans une variante, la section de fil de la paroi de fond est aussi latéralement en déport de la paroi de côté. Dans une autre variante, les fils des cadres des parois latérales comprenant un déport correspondant pour se conformer à la forme du prolongement vertical du fil de la paroi de fond. Les éléments détrompeurs peuvent avoir une forme de « V » inversée, afin de permettre un empilement stable avec un positionnement défini des corbeilles pliées. Les déports correspondants des cadres des parois latérales peuvent comprendre une section de fil transversale sur un coté configurée pour interférer avec l'élément détrompeur pour arrêter la rotation de la paroi latérale en position montée.

Dans un aspect avantageux de l'invention, la hauteur de la paroi arrière peut être inférieure à la hauteur des parois latérales de manière à assurer des appuis, lors d'un empilement en position montée, que sur les deux parois latérales.

D'autres buts et aspects avantageux de l'invention ressortiront des revendications, de la description détaillée d'une forme d'exécution ci-après et des dessins annexés, dans lesquels :
la figure 1a est une vue en perspective d'une corbeille pliable selon une forme d'exécution de l'invention, représentée en position montée (prête à être utilisée) ;
la figure 1b est une vue en perspective du coté gauche de la corbeille de la figure 1 a avec deux éléments de verrouillage selon une première forme d'exécution;
la figure 1c est une vue en perspective d'un élément de verrouillage monté sur la corbeille;
la figure 1d est une vue de dessus d'un élément de verrouillage monté sur la corbeille;
la figure 2a est une vue en perspective de la forme d'exécution selon la figure 1 a montrant la corbeille en cours de montage;
la figure 2b est une vue de la forme d'exécution selon la figure 1 a montrant une paroi latérale de la corbeille en cours de montage;
la figure 3a est une vue en perspective de la forme d'exécution selon la figure 1a, montrant la corbeille en position pliée ;
la figure 3b est une vue en perspective d'une partie de la forme d'exécution selon la figure 1a, montrant la corbeille en position pliée ;
la figure 3c est une vue en coupe selon la ligne IIIc-IIIc de la figure 3a;
les figures 4a et 4b sont des vues en perspective de l'élément de verrouillage selon une première forme d'exécution de l'invention;
la figure 4c est une vue de dessus de l'élément de verrouillage des figures 4a et 4b;
la figure 5 est une vue de dessus d'un élément de verrouillage selon une variante ;
la figure 6a est une vue en perspective partielle d'un coin avant de la corbeille selon une deuxième forme d'exécution de l'invention;
la figure 6b est une vue en perspective partielle d'un coin arrière de la corbeille selon la deuxième forme d'exécution de l'invention;
la figure 7a est une vue en perspective d'un élément de verrouillage rapporté de la corbeille selon la deuxième forme d'exécution de l'invention;
la figure 7b est une vue de dessus de l'élément de verrouillage de la figure 7a ;
la figure 8a est une vue en perspective d'une corbeille pliable selon une autre forme d'exécution de l'invention, représentée en position montée (prête à être utilisée) ;
la figure 8b est une vue en perspective d'un côté de la corbeille de la figure 8a;
la figure 9a est une vue en perspective de la forme d'exécution selon la figure 8a, montrant deux corbeilles en position pliées et empilées;
la figure 9b est une vue en perspective de la forme d'exécution selon la figure 8a, montrant une corbeille en position pliée ;
la figure 9c est une vue en perspective de la forme d'exécution selon la figure 8a montrant la corbeille en cours de montage; et
la figure 10 est une vue en perspective d'une corbeille pliable selon une variante de la corbeille de la figure 8a.

Faisant référence aux figures, une corbeille pliable selon une forme d'exécution de l'invention comprend une paroi de fond 1, une paroi avant 2, une paroi arrière 3, et des parois latérales 4 et 5. Chacune des parois comprend un cadre métallique 6, 7, 8, 9 formé (dans la forme d'exécution illustrée) d'un fil métallique épais plié, et d'une grille formée d'un ensemble de fils métalliques 13, 14 s'étendant entre les bords du cadre.

La paroi avant 2 est de plus faible hauteur que la paroi arrière 3, de façon à permettre l'accès aux produits contenus à l'intérieur de la corbeille, lorsqu'une corbeille identique est gerbée empilée sur celle-ci ou lorsque la corbeille est suspendue sous la paroi d'un rayon de présentation.

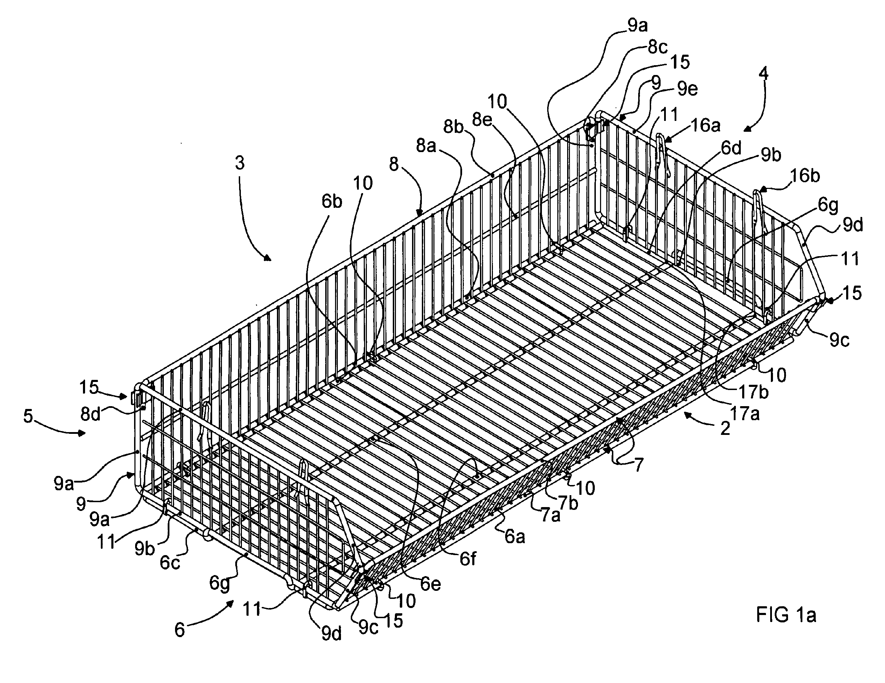

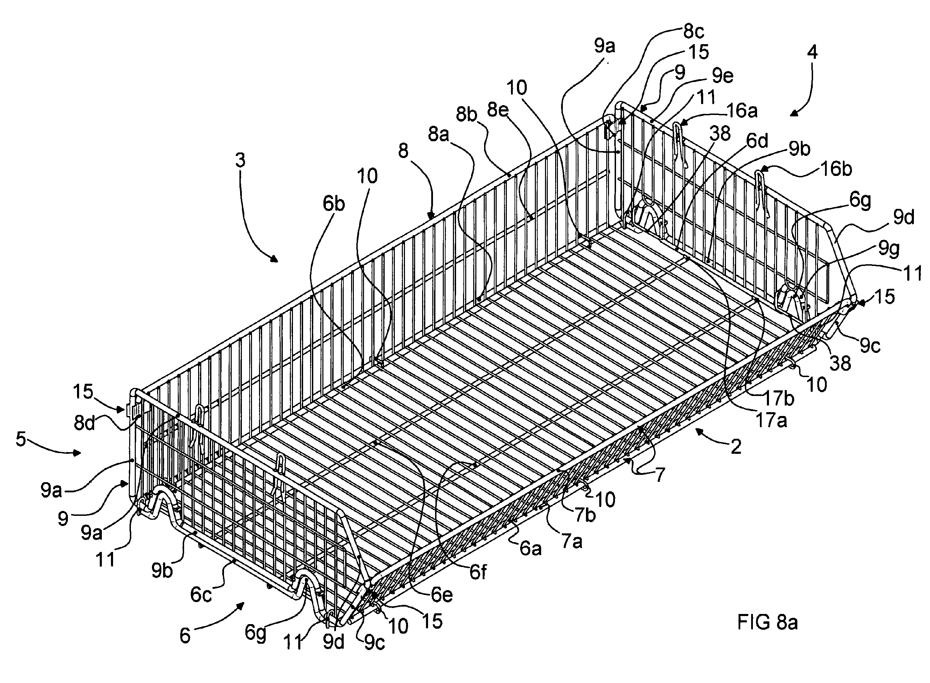

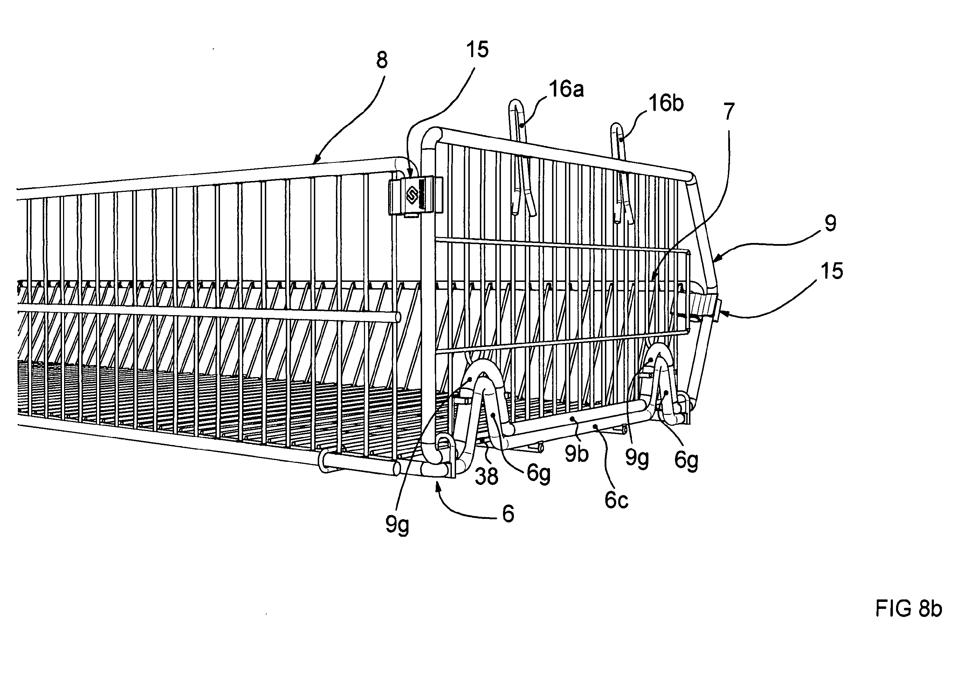

Le cadre 9 de chaque paroi latérale 4, 5 a cinq côtés avec un côté arrière vertical 9a, un côté inférieur horizontal 9b dont la longueur correspond à la profondeur du fond 1, un côté supérieur horizontal 9e, un côté avant inférieur 9c incliné dont la hauteur est inférieure à celle du côté arrière 6, et un côté avant supérieur 9d incliné reliant entre elles une extrémité du côté supérieur 9e et celle du côté avant inférieur 9c. La hauteur du côté verticale 9a peut correspondre à celle de la paroi arrière 3 telle que illustré dans la variante de la figure 1a, ou peut avantageusement avoir une hauteur légèrement supérieure à celle de la paroi arrière telle que illustré dans la figure 8a. Cela améliore l'assise et la stabilité des corbeilles empilées en s'assurant que les appuis ne se trouvent que sous les deux parois latérales.

La paroi latérale 5 est symétrique à la paroi latérale 4 par rapport à un plan vertical médian.

Le cadre de la paroi de fond 1 de la corbeille comporte, sur chacun de ses quatre côtés, des pivots 10, 11, qui sont dans la forme d'exécution illustrée, sous forme de cavaliers essentiellement en forme de U réalisés en fil métallique et dont les extrémités sont soudées au cadre. Il est également envisageable d'avoir des pivots sous forme d'anneaux en fil métallique ou en d'autres matériaux non soudés à un cadre et entourant les fils des cadres mutuellement pivotants. Dans les variantes des figures 1a, 2a, 8a, 9a, les cavaliers 10 sur les côtés avant 6a et arrière 6b du cadre 6 s'étendent dans une direction horizontale (parallèle à la paroi de fond), alors que les cavaliers 11 sur les côtés latéraux 6c, 6d du cadre 6 s'étendent dans une direction verticale (orthogonale à la paroi de fond). Les cavaliers 10, 11 sont destinés à enfermer, avec un jeu juste suffisant pour permettre la rotation du côté inférieur 7a, 8a, 9b des cadres 7, 8, 9 des parois avant 2, arrière 3 et latérales 4, 5 de la corbeille destinée à venir s'appuyer sur le fond 1. Les pivots avant et arrière 10 permettent un pivotement d'au moins 270° des parois avant 2 et arrière 3 par rapport à la paroi de fond, de manière à pouvoir replier les parois avant et arrière contre la face inférieure de la paroi de fond, alors que les pivots latéraux 11 permettent un pivotement d'au moins 90° des parois latérales 4, 5 par rapport à la paroi de fond, de manière à pouvoir replier les parois latérales sur la face supérieure de la paroi de fond.

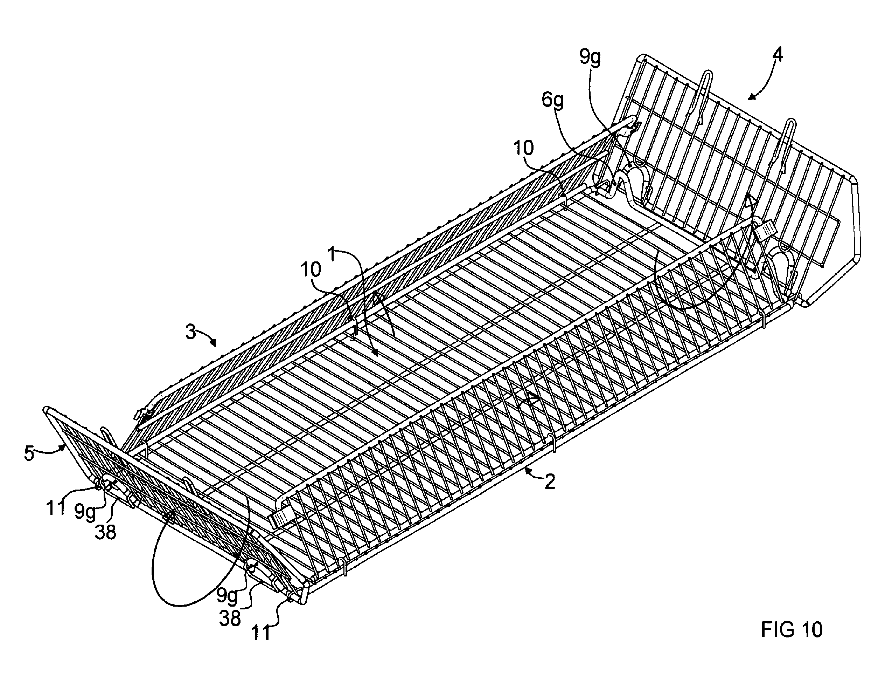

Dans la variante de la figure 10, les cavaliers 10 sur les côtés avant 6a et arrière 6b du cadre 6 s'étendent dans une direction verticale (orthogonale à la paroi de fond), alors que les cavaliers 11 sur les côtés latéraux 6c, 6d du cadre 6 s'étendent dans une direction horizontale (parallèle à la paroi de fond). Les cavaliers 10, 11 sont destinés à enfermer, avec un jeu juste suffisant pour permettre la rotation du côté inférieur 7a, 8a, 9b des cadres 7, 8, 9 des parois avant 2, arrière 3 et latérales 4, 5 de la corbeille destinée à venir s'appuyer sur le fond 1. Les pivots avant et arrière 10 permettent un pivotement d'au moins 90° des parois avant 2 et arrière 3 par rapport à la paroi de fond, de manière à pouvoir replier les parois avant et arrière contre la face supérieure de la paroi de fond, alors que les pivots latéraux 11 permettent un pivotement d'au moins 270° des parois latérales 4, 5 par rapport à la paroi de fond, de manière à pouvoir replier les parois latérales sur la face inférieure de la paroi de fond.

Les cadres 8, 7 des parois arrière 3 et avant 2 ont des parties latérales 8c, 8d ,7c, 7d s'étendant verticalement des extrémités des côtés supérieurs 8b, 7b (c'est-à-dire s'étendant orthogonalement aux côtés supérieurs 8b, 7b des cadres 8, 7), les parties latérales 8c, 8d, 7c, 7d servant comme support pour le montage des pièces de verrouillage 15. Les parties latérales ont une extrémité libre permettant aux pièces de verrouillage 15, 15', 15" de pouvoir être enfilées.

Lorsque les parois arrière et avant sont pliées sous ou sur la paroi de fond en position démontée, les parties latérales 8c, 8d, 7c, 7d des cadres 8, 7 se trouvent parallèles et adjacentes aux côtés latéraux respectifs 6c, 6d de la paroi de fond 1.

Le cadre 6 de la paroi de fond comprend en outre des éléments intermédiaires 6e, 6f parallèles aux côtés avant et arrière et soudés à leur extrémité aux côtés latéraux 6c, 6d du cadre. Les côtés latéraux avant et arrière 6a, 6b, 6c, 6d du cadre de la paroi de fond forment essentiellement un rectangle fermé rigide.

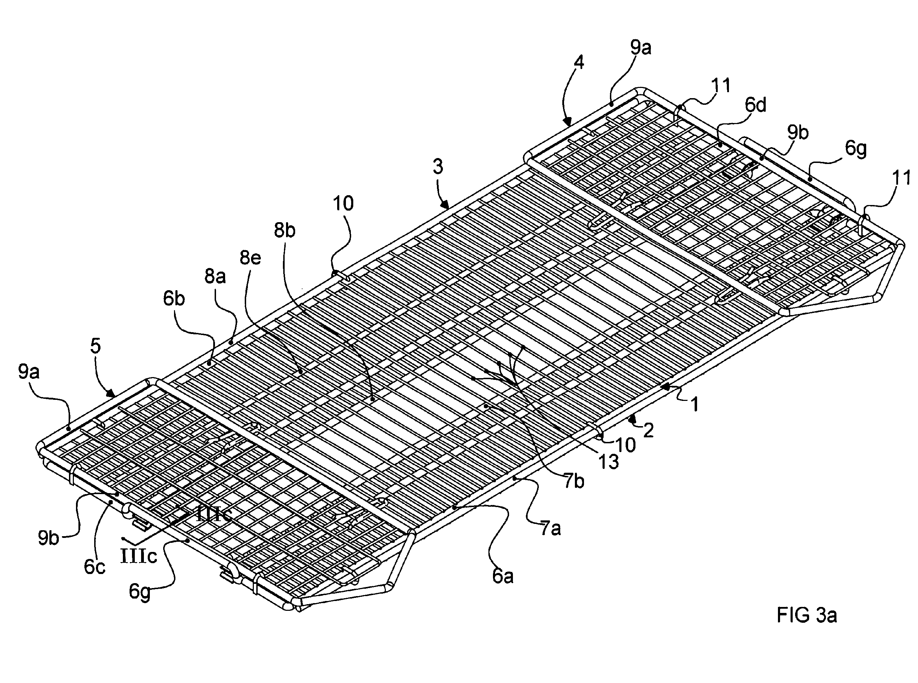

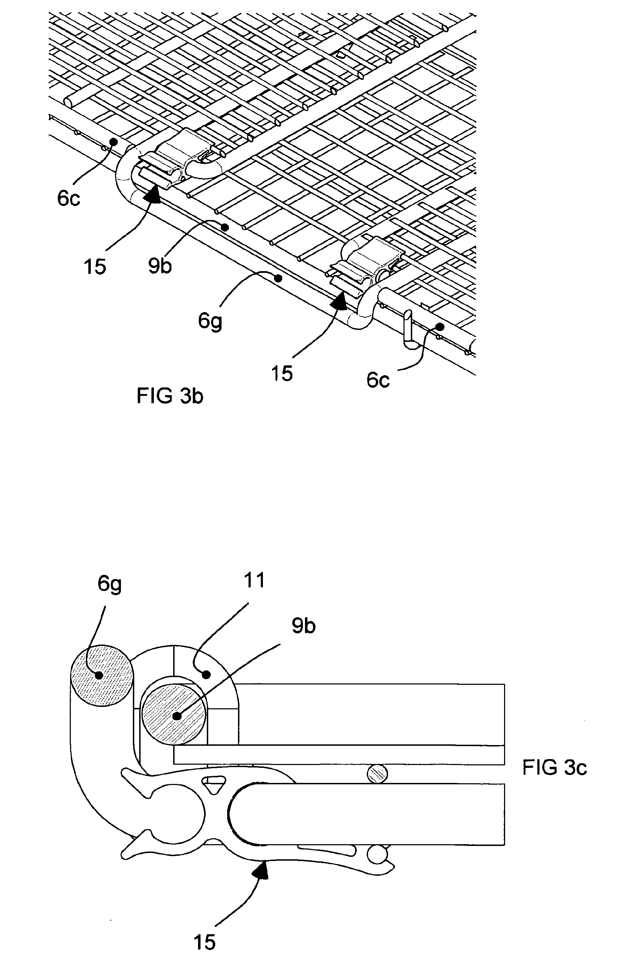

Faisant référence notamment aux figures 1a, 1b, 2b, 3a-3d, 8a-10, afin de faciliter le montage des parois dans le bons sens, les côtés latéraux de la corbeille peuvent avantageusement comprendre des éléments détrompeurs 6g contraignant l'utilisateur à ne monter la corbeille dans un seul sens.

Dans les variantes des figures 1a, 1b, 2b, 3a-3d, l'élément détrompeur comprend une section de fil transversal 6g de la paroi de fond qui se prolongent latéralement en déport de la paroi de côté 4, 5, et verticalement en déport du fil bas 9b de la paroi de côté. Ces déports présentent aussi avantageusement un espace pour le logement des pièces de verrouillage 15, 15', 15" en position rabattue. Cet espace assure, en transport comme en stockage de longue durée, que les pièces de verrouillage 15, 15', 15" ne soient pas en appui sur les fils latéraux 6c, 6d de la paroi de fond.

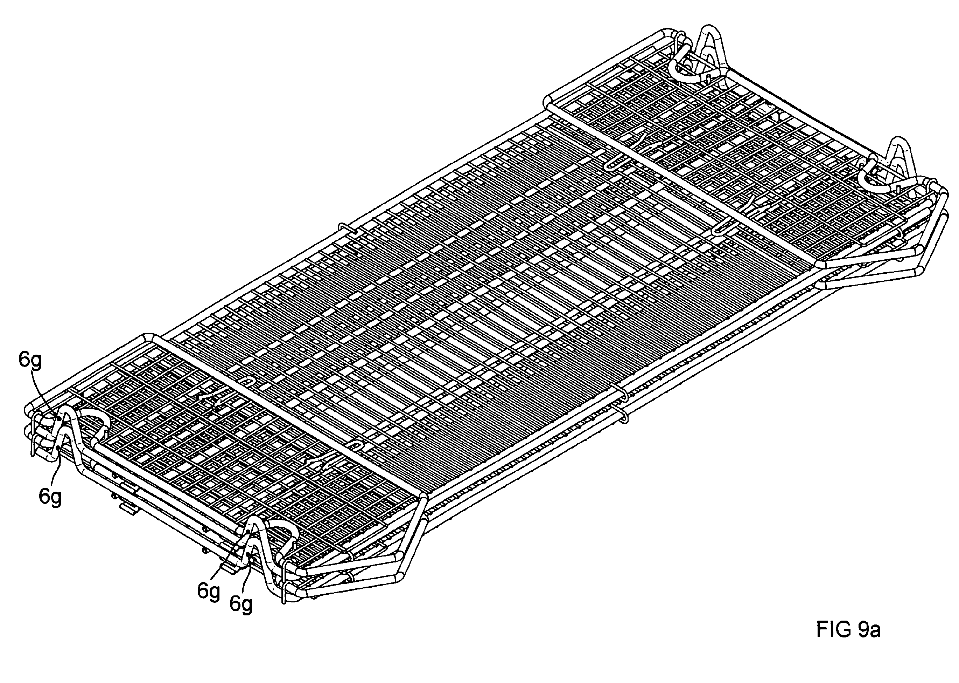

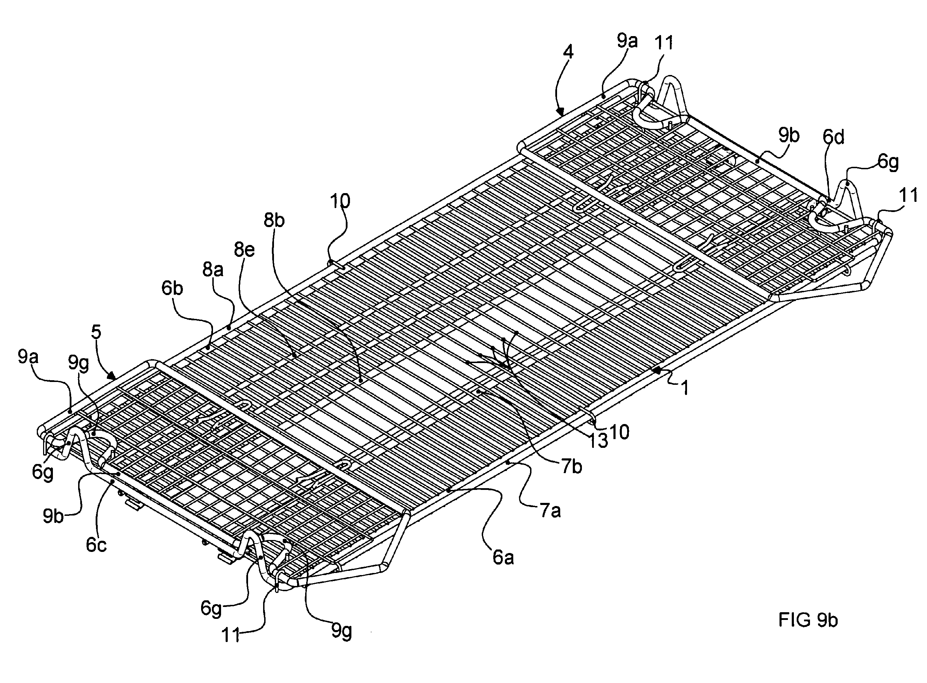

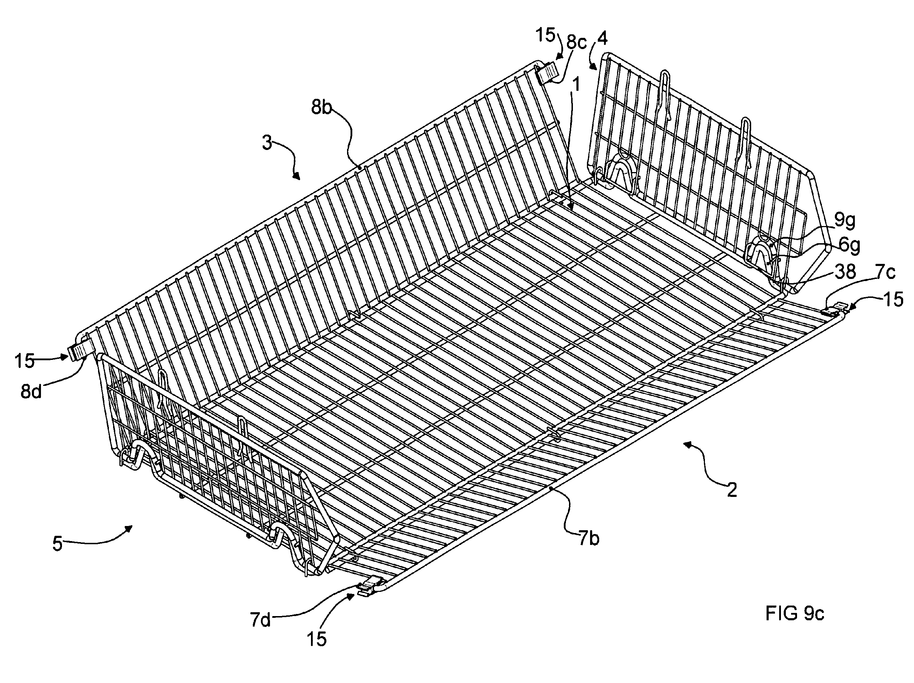

Dans les variantes des figures 8a à 10 l'élément détrompeur comprend une ou deux sections de fil transversal 6g de la paroi de fond qui se prolongent verticalement en déport du fil bas 9b de la paroi de côté, les fils 9b des cadres des parois latérales 4, 5 comprenant un déport correspondant 9g pour se conformer à la forme du prolongement vertical du fil de la paroi de fond. L'élément détrompeur à avantageusement une forme évasée, par exemple de « V » inversée, afin de permettre un empilement stable avec un positionnement défini des corbeilles pliées tel que illustré à la figure 9a. Dans cette variante, une section de fil transversale 38 de grille sur un coté du déport 9g interfère avec l'élément détrompeur pour arrêter la rotation de la paroi latérale. Dans la variante des figures 8a, 9a la section de fil 38 est soudé sur le côté intérieure alors que dans la variante de la figure 10 la section de fil est soudé sur le côté extérieure de l'élément 9g.

Le cadre 8 de la paroi arrière 3 comprend aussi un élément intermédiaire 8e sous forme d'un fil métallique disposé essentiellement de façon parallèle aux côtés supérieurs et inférieurs 8a, 8d, et soudé au fil métallique 14 de la grille afin de rigidifier la grille celle-ci.

Des éléments de guidage 16 sont disposés sur les parois latérales en saillie par rapport au côté supérieur 9e du cadre. Dans la forme d'exécution illustrée, les éléments de guidage sont sous forme de fils métalliques en U renversés, soudés au cadre sur le côté intérieur du cadre (en position montée). Les éléments de guidage 16 servent à positionner une corbeille placée sur une autre corbeille lors de l'empilement de plusieurs corbeilles. Le positionnement des éléments de guidage 16 est configuré de sorte à ce que l'élément de guidage s'enfile dans un coin formé par la jonction de deux éléments de cadre orthogonaux de la paroi de fond. Il y a de préférence deux éléments de guidage sur chaque paroi latérale, un élément de guidage arrière 16a et un élément de guidage avant 16b. Ainsi, les éléments de guidage arrière16a s'enfilent dans les coins 17a formés par l'élément du cadre intermédiaire arrière 6e soudé transversalement aux côtés des cadres 6d et 6c, et les éléments de guidage avant 16b s'enfilent dans les coins 17b formés par les jonctions des côtés latéraux 6c, 6d et du côté avant 6a.

Les fils 14 des grilles des parois avant et arrière sont soudés aux cadres 7,8 sur leurs faces intérieures (lorsque la corbeille est en position montée). Les fils 13 de la grille de la paroi de fond 1 sont également soudés sur le cadre de la paroi de fond sur sa face supérieure, c'est-à-dire sur la face intérieure de la corbeille lorsque la corbeille est en position montée. Lorsque les parois avant et arrière sont repliées (c'est-à-dire en position démontée) contre la face inférieure de la paroi de fond, les fils 14 des grilles des parois avant 2 et arrière 3 sont éloignés des fils 13 de la grille de la paroi de fond 1. Les côtés extérieurs des cadres 8 et 7 des parois arrière 3 et avant 2 se trouvent positionnés contre les fils 13 de la grille de la paroi de fond. Dans cette position démontée, les éléments 8a, 8b du cadre 8 de la paroi arrière sont essentiellement dans le même plan que les éléments 6a, 6b, 6e, 6f du cadre de la paroi de fond, réduisant ainsi le volume des parois pliées ainsi que le jeu nécessaire pour permettre le pivotement des parois. Les éléments 7b, 7a, 7c, 7d du cadre de la paroi avant 2 sont disposés également essentiellement dans le même plan que le cadre de la paroi de fond en position démontée.

Les côtés supérieurs 8b et inférieurs 8a du cadre arrière 8 sont un peu plus courts que le côté arrière 6b du cadre 6 de la paroi de fond 1 de manière à permettre au cadre 8 de la paroi arrière de s'insérer dans le périmètre du cadre 6 de la paroi de fond. De même, les côtés supérieurs 7b et 7a du cadre 7 de la paroi avant 2 sont légèrement plus courts que le côté avant 6a du cadre 6 de la paroi du fond 1. Les parois latérales 4, 5 sont quant à elles repliées sur la face supérieure de la paroi de fond 1 en position démontée.

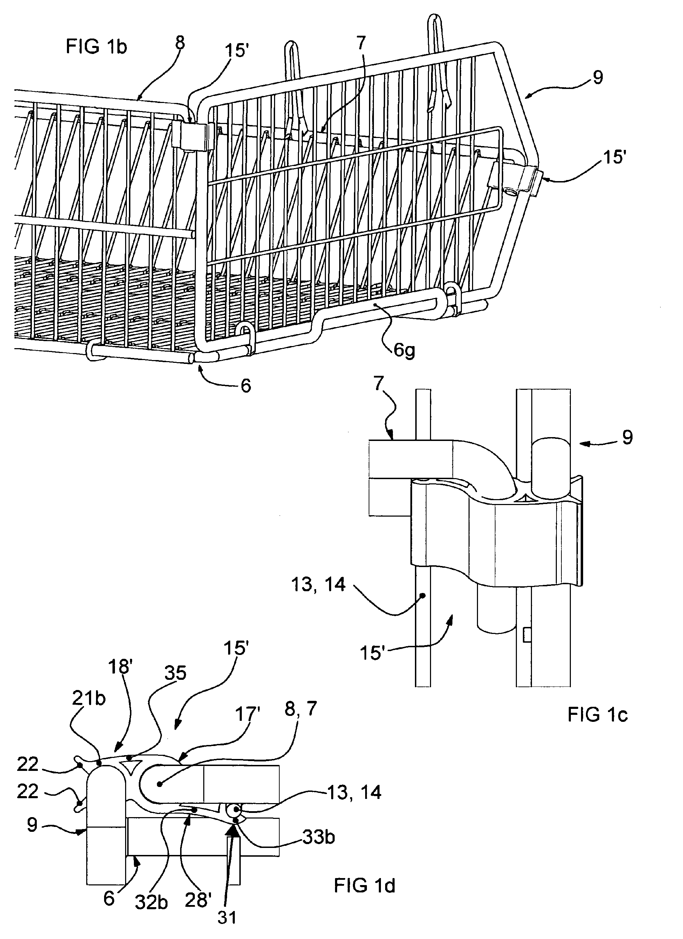

La configuration décrite ci-dessus permet aux pivots avant et arrière 10 (les cavaliers en U orientés horizontalement) d'avoir un jeu tout juste suffisant pour permettre la rotation des côtés 7a, 8a des cadres avant 7 et arrière 8, sans nécessiter de jeu supplémentaire. Le jeu des pivots 11 sur les côtés latéraux 6c, 6d peut également être réduit au jeu nécessaire pour plier les parois latérales 4, 5 sur la face supérieure de la paroi de fond 1, sans jeu supplémentaire nécessaire pour le verrouillage ou pour accommoder les parois avant et arrière. Ce jeu réduit des pivots permet de réaliser une corbeille plus stable, rigide et moins bruyante à l'utilisation que les corbeilles pliables conventionnelles. La pièce de verrouillage rapportée 15 permet en plus d'éliminer le jeu entre les parois avant, arrière et latérales lors du verrouillage des parois en position montée telles qu'illustrées dans la figure 1.

L'élément de verrouillage 15, 15', 15" comprend une première partie de fixation 17, 17' destinée à être montée sur le cadre d'une paroi et une deuxième partie de fixation 18, 18' destinée à être fixée au cadre de la paroi adjacente, les deux parties de fixation étant reliées solidairement ensemble. L'élément de verrouillage 15, 15', 15" peut avantageusement être formé d'une pièce en matière plastique, de préférence en matière plastique injectée thermodurcissable.

Chaque partie de fixation 17, 17', 18, 18' comprend un canal 19, 20 pour loger des portions de cadres respectifs. La deuxième partie de fixation 18 comprend des bras élastiques 21 configurés pour pincer élastiquement le fil du cadre, les extrémités libres 22 des bras élastiques formant un « V » pour écarter les bras et guider la portion du fil du cadre dans le canal 20. La deuxième partie de fixation permet donc l'insertion de la portion de cadre dans le canal dans une direction orthogonale à l'axe A2 du canal.

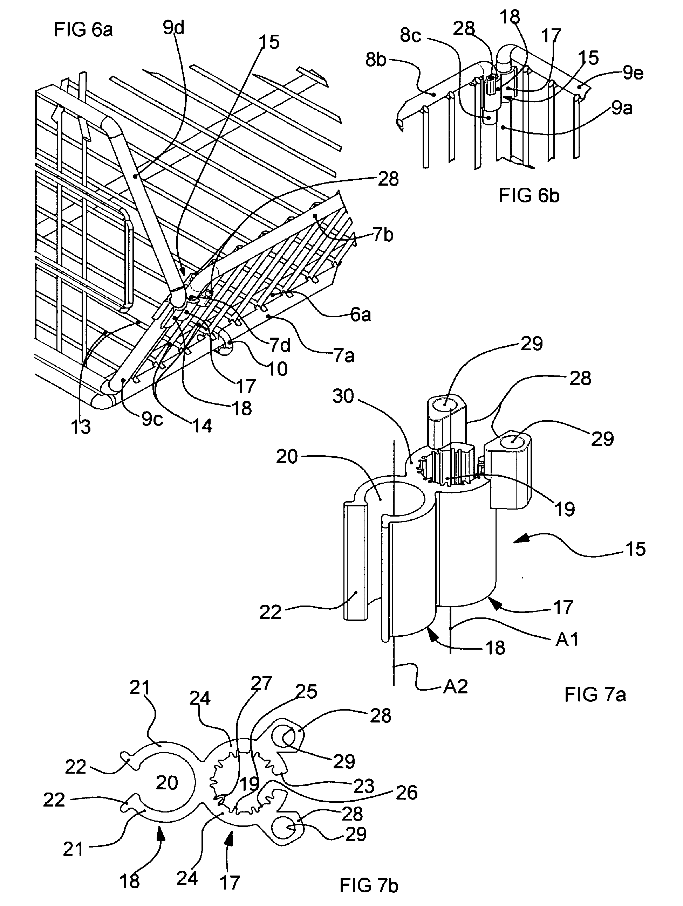

La première partie de fixation 17 est configurée pour être enfilée sur une portion du cadre dans la direction de l'axe central A1 du canal 19, notamment sur les parties latérales 8c, 8d ,7c, 7d des cadres 8, 7 des parois arrière 3 et avant 2. Dans une forme d'exécution (figs 6a-7b), la première partie de fixation 17 peut avoir une ouverture 23 débouchant dans le canal afin de former des bras 24 pouvant déformer élastiquement, afin de donner une certaine élasticité à la prise de la première partie de fixation 17 sur le fil du cadre.

Dans une forme d'exécution préférée, les parois respectives formant les bras 21, 24 sont configurées pour que la force élastique de serrement des bras 24 de la première partie de fixation sur le fil du cadre soit supérieure à la force élastique de serrement des bras 21 de la deuxième partie de fixation sur le fil du cadre. Dans le cadre de l'invention, il est également possible que la paroi de la première partie de fixation 17, 17' soit fermée. Pour faciliter l'insertion de la première partie de fixation 17 sur le fil du cadre, le côté supérieur 30 du canal 19 peut avoir une forme évasée, par exemple une forme d'entonnoir.

Dans une forme d'exécution, la surface intérieure de la paroi du canal 19 de la première partie de fixation 17 comprend des protubérances 25 destinées à être écrasées contre le fil du cadre après enfilement, afin d'augmenter la force de frottement entre la partie de fixation et la portion de cadre, cela pour mieux résister au déplacement de l'élément de verrouillage en rotation et dans la direction axiale A1 sur le fil du cadre. Les protubérances 25 sont en saillie par rapport à la surface intérieure 26 de la paroi formant le canal 19 venant en appui élastique contre la portion de cadre. Dans la forme d'exécution illustrée à la figure 6a et la figure 6b, les protubérances 25 ont une forme essentiellement prismatique avec des lignes génératrices parallèles à l'axe A2 du canal 19. Des rainures 27 peuvent être formées à la base des protubérances afin de permettre un déplacement de matière lors de l'écrasement des protubérances.

Il est également possible d'avoir des protubérances avec des autres formes, par exemple des protubérances discrètes non prismatiques réparties sur la surface intérieure 26.

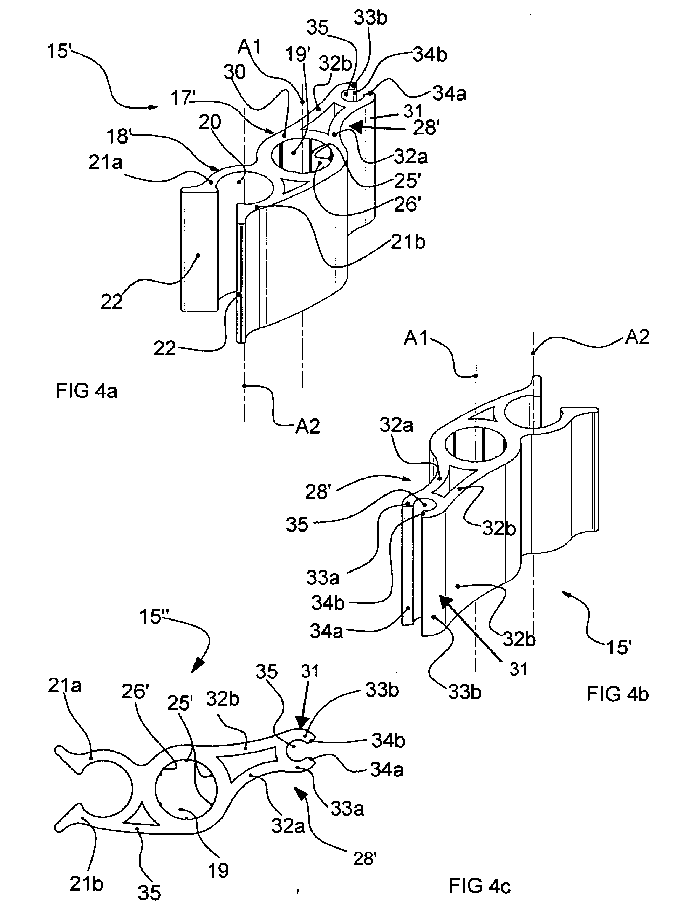

La première partie de fixation peut comprendre en outre des éléments anti-rotation 28, 29 sous forme d'extensions destinées à être positionnées de part et d'autre d'une portion de cadre transversale à la portion de cadre sur laquelle la partie de fixation est enfilée comme illustré dans la figure 4. Dans la forme d'exécution illustrée, les extensions ou oreilles 28, 29 s'étendent solidairement de la paroi 24 dans une direction essentiellement parallèle à l'axe A1 du canal 19, au delà de la face supérieure 30 de la pièce de verrouillage. Les extensions peuvent comprendre en outre des cavités 29 pour loger des extrémités d'un outil d'écartement des bras 24 lors de l'enfilement de la partie de fixation 17 sur une portion de cadre. Cela permet d'éviter un écrasement et l'usure de la surface intérieure de la paroi 24 lors de son enfilement avant d'arriver à sa position de montage finale illustrée dans la figure 4.

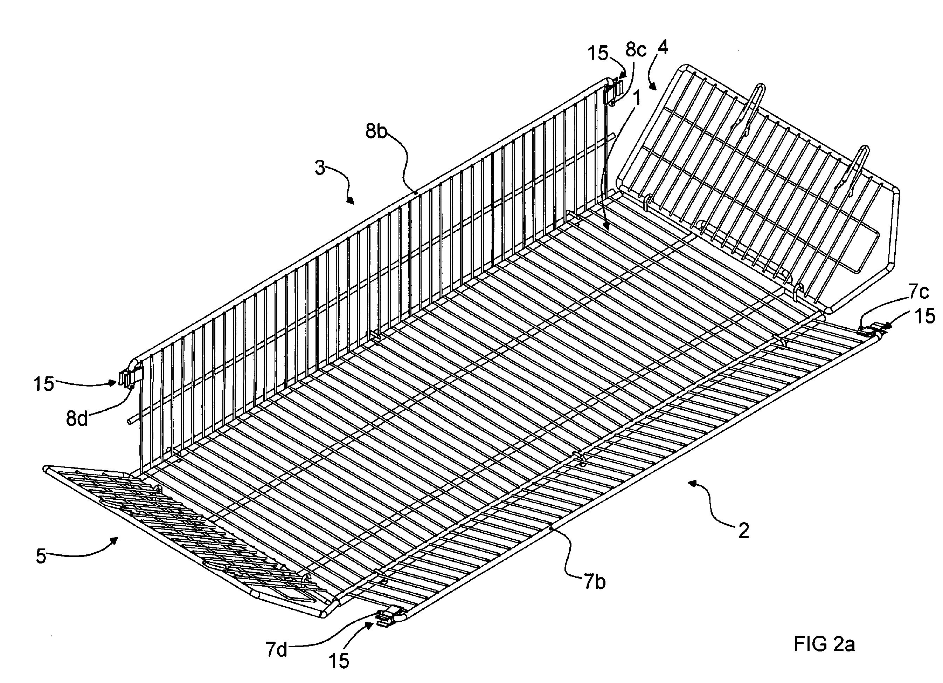

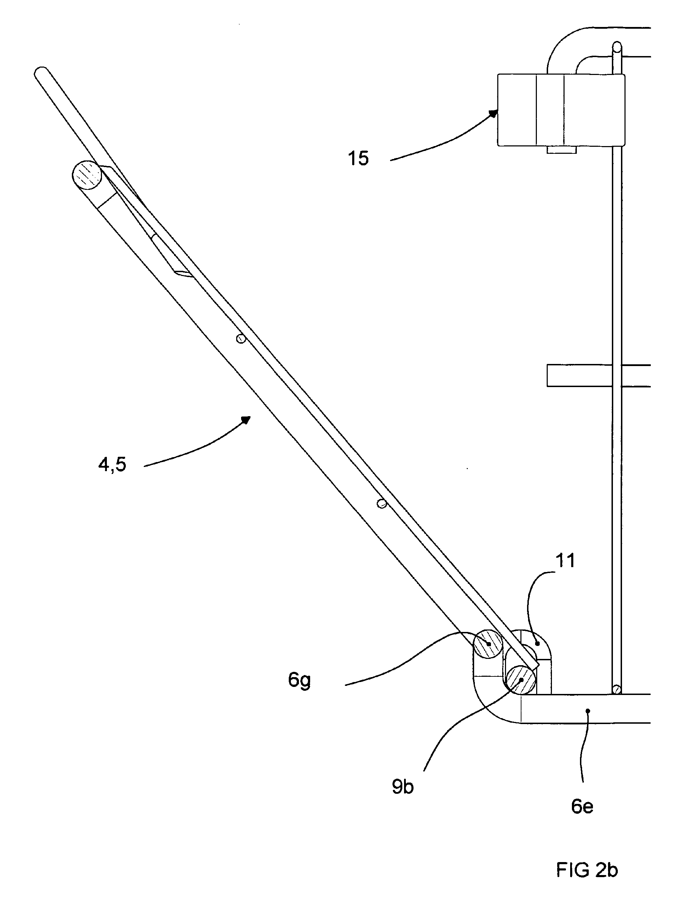

L'utilisation de la corbeille pliable selon l'invention est alors la suivante. La corbeille étant dans sa position démontée représentée à la figure 2, on procède alors à la rotation des parois latérales 4, 5, arrière 3 et avant 2 en les éloignant de leurs positions pliées. Pour la première utilisation, les pièces de verrouillage 15 sont ensuite enfilées sur chacune des parties latérales 8c, 8d, 7c, 7d des cadres 8, 7 des parois arrière 3 et avant 2, jusqu'à ce que les oreilles 28 des éléments de verrouillage chevauchent le côté supérieur 8b, 7b des cadres 8, 7 respectifs. Un outil d'écartement inséré dans les trous de montage 29 pourrait être utilisé pour faciliter l'insertion des éléments de verrouillage. Il est également envisageable de fournir une corbeille pliable avec les pièces de verrouillage montées ou pré-montées en usine sur les cadres 8, 7.

On peut ensuite procéder à la fixation des parois latérales 4, 5 aux parois arrière 3 et avant 2 en poussant leurs cadres dans les parties de fixation élastiques 18 des éléments de verrouillage 15. La corbeille peut aussi être facilement pliée en tirant sur les parois latérales pour dégager les cadres des parties de fixation 18 des éléments de verrouillage 15.

Faisant référence notamment aux figures 1a à 1d, 4a à 4c et 5, une forme d'exécution de l'élément de verrouillage 15', 15" comprend une première partie de fixation 17' destinée à être montée sur le cadre d'une paroi et une deuxième partie de fixation 18' destinée à être fixée au cadre de la paroi adjacente, les deux parties de fixation étant reliées solidairement ensemble. L'élément de verrouillage 15', 15" peut avantageusement être formé d'une pièce en matière plastique, de préférence en matière plastique injectée thermodurcissable.

Chaque partie de fixation 17', 18' comprend un canal 19', 20 pour loger des portions de cadres respectifs. La deuxième partie de fixation 18' comprend des bras élastiques 21 a et 21 b configurés pour pincer élastiquement le fil du cadre, les extrémités libres 22 des bras élastiques formant un « V » pour écarter les bras et guider la portion du fil du cadre dans le canal 20. La deuxième partie de fixation permet donc l'insertion de la portion de cadre dans le canal dans une direction orthogonale à l'axe A2 du canal.

La première partie de fixation 17' est configurée pour être enfilée sur une portion du cadre dans la direction de l'axe central A1 du canal 19', notamment sur les parties latérales 8c, 8d ,7c, 7d des cadres 8, 7 des parois arrière 3 et avant 2. Pour faciliter l'insertion de la première partie de fixation 17' sur le fil du cadre, le côté supérieur 30 du canal 19' peut avoir une forme évasée, par exemple une forme d'entonnoir.

La surface intérieure de la paroi du canal 19' de la première partie de fixation 17' peut comprendre des protubérances 25' destinées à être écrasées contre le fil du cadre après enfilement, afin d'augmenter la force de frottement entre la partie de fixation et la portion de cadre, cela pour mieux résister au déplacement de l'élément de verrouillage dans la direction axiale A1 sur le fil du cadre. Les protubérances 25' sont en saillie par rapport à la surface intérieure 26' de la paroi formant le canal 19' venant en appui contre la portion de cadre. Il est également possible d'avoir des protubérances avec des autres formes, par exemple des protubérances discrètes non prismatiques réparties sur la surface intérieure 26'. Il est également possible d'avoir une surface lisse sans aucune protubérance dans le canal 19' dans cette forme d'exécution, notamment en raison de la présence de l'élément anti-rotation 28'.

L'élément anti-rotation 28' comprend une troisième partie de fixation 31 destiné à être montée sur la grille adjacente du cadre 8c, 8d, 7c, 7d, et est relié solidairement à l'élément 17' par des bras 32a, 32b. Le bras 32a, 32b comprend de préférence une certaine élasticité. La troisième partie de fixation 31 comprend des bras élastiques 33a, 33b configurés pour pincer élastiquement un fil de la grille, les bras élastiques 33a, 33b ayant la forme d'un « C » avec un canal 35 logeant le fil de la grille La troisième partie de fixation empêche la rotation de l'élément de verouillage 15' sur l'axe A1 du cadre 7c, 7d, 8c, 8d.

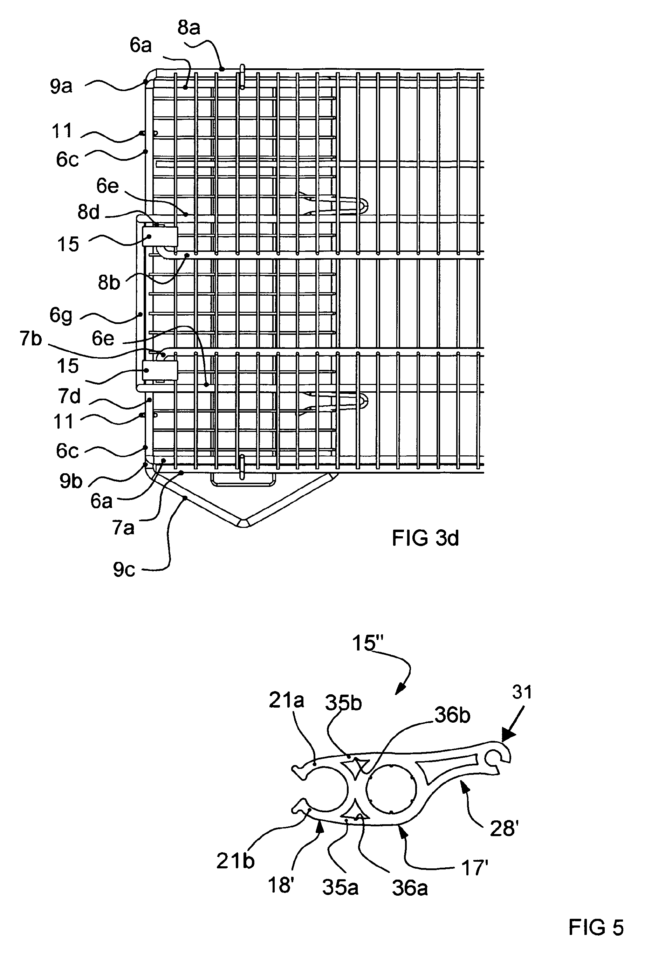

Les première et deuxième parties de fixation 17', 18' peuvent comprendre en outre une paroi de liaison 35, 35a, 35b sur un côté (voir fig. 4c) ou sur deux côtés (voir fig. 5) pour rigidifier les bras élastiques 21 a, 21 b. Dans la première variante 15' (fig. 4c) la paroi de liaison permet également de fournir une surface de référence ou de présentation pour un montage dans l'orientation correcte de l'élément de verrouillage. Dans la deuxième variante 15" (fig. 5), les parois de liaison comportent des affaiblissements 36a, 36b afin de réduire la rigidité de ces parois pour contrôler l'élasticité des bras élastiques 21 b, 21 a.

## Revendications

1. Corbeille pliable en fil métallique comprenant une paroi de fond (1), deux parois latérales (4, 5), une paroi arrière (3) une paroi avant (2), et des moyens de fixation pour verrouiller les parois latérales aux parois avant et arrière en position montée, chacune des parois comprenant un cadre en fil métallique et une grille, les parois avant, arrière et latérales étant montées de manière pivotante à la paroi de fond, le cadre (6) de la paroi de fond (1) étant fixé de manière inséparable sur chacun de ses quatre côtés par des pivots (10, 11) aux cadres (7, 8, 9) des parois latérales et avant, les moyens de fixation comprenant des pièces de verrouillage rapportées (15), chacune des pièces de verrouillage comprenant une première partie de fixation (17) et une deuxième partie de fixation (18), la première partie de fixation comprenant un canal (19) destiné à être enfilé sur une portion de cadre (7c, 7d, 8c, 8d) d'une paroi et des moyens anti-rotation (28, 28'), et la deuxième partie de fixation (18) comprenant des bras élastiques (21) configurés pour pincer élastiquement une portion du fil du cadre de la paroi adjacente, les deux parties de fixation étant reliées solidairement, ladite corbeille étant **caractérisée en ce que** les moyens anti-rotation comprennent soit des extensions (28) s'étendant généralement dans la direction de l'axe (A1) du canal (19) en saillie par rapport à une extrémité supérieure (30) du canal (19), soit
une extension (28') reliée solidairement à la première partie de fixation (17') et ayant une troisième partie de fixation (31) destinée à être fixée sur un fil de la grille (14) des parois arrière et avant (2, 3).

2. Corbeille pliable selon la revendication 1, **caractérisée en ce que** la pièce de verrouillage est une pièce injectée en matière plastique thermodurcissable.

3. Corbeille pliable selon la revendication 1 ou 2, **caractérisée en ce que** une surface intérieure d'une paroi formant le canal (19) de la première partie de fixation (17) comprend des protubérances (25) configurées pour être écrasées lors du montage sur une portion de cadre (7c, 7d, 8c, 8d).

4. Corbeille selon la revendication 5 **caractérisée en ce que** l'extension (28') est relié solidairement à la première partie de fixation (17') par des bras (32a, 32b) ayant une certaine élasticité.

5. Corbeille selon la revendication 5 ou 6 **caractérisée en ce que** la troisième partie de fixation (31) comprend des bras élastiques (33a, 33b) configurés pour pincer élastiquement un fil de la grille.

6. Corbeille selon l'une des revendications précédentes, **caractérisée en ce que** la corbeille comprend des éléments détrompeurs (6g) sur des côtés latéraux, formés par une section de fil transversal (6c) de la paroi de fond qui se prolongent verticalement en déport d'un fil bas (9b) de la paroi latérale (4, 5).

7. Corbeille pliable selon la revendication 8, **caractérisée en ce que** les éléments détrompeurs (6g) se prolongent aussi latéralement en déport de la paroi latérale (4, 5).

8. Corbeille pliable selon la revendication 8 ou 9, **caractérisée en ce que** la section de fil transversal (6g) en déport présente un espace pour le logement de pièces de verrouillage (15, 15', 15") en position rabattue.

9. Corbeille pliable selon la revendication 8, **caractérisée en ce que** les fils (9b) des cadres des parois latérales (4, 5) comprenant un déport correspondant (9g) pour se conformer à la forme du prolongement vertical du fil de la paroi de fond.

10. Corbeille pliable selon la revendication précédente, **caractérisée en ce que** les éléments détrompeurs (6g) ont une forme évasée de « V » inversée, afin de permettre un empilement stable avec un positionnement défini des corbeilles pliées.

11. Corbeille pliable selon l'une des deux revendications précédentes, **caractérisée en ce que** les déports correspondants (9g) des cadres des parois latérales comprennent une section de fil transversale (38) de grille sur un coté configurée pour interférer avec l'élément détrompeur (6g) pour arrêter la rotation de la paroi latérale en position montée.

12. Corbeille pliable selon l'une des revendications précédentes, **caractérisée en ce que** le cadre (6) de la paroi de fond (1) comporte, sur chacun de ses quatre côtés, des pivots (10, 11) sous forme de cavaliers en forme de U réalisés en fil métallique et dont les extrémités sont soudées au cadre, les cavaliers (10) sur les côtés avant (6a) et arrière (6b) du cadre s'étendant dans une direction parallèle à la paroi de fond, et les cavaliers (11) sur les côtés latéraux (6c, 6d) du cadre s'étendant dans une direction orthogonale à la paroi de fond, les fils (14) des grilles des parois avant (2) et arrière (3) étant soudés aux cadres (7, 8) sur leurs faces intérieures et des fils (13) de la grille de la paroi de fond (1) étant soudés sur le cadre de la paroi de fond sur sa face supérieure, les parois avant et arrière étant configurées pour être rabattues contre la face inférieure de la paroi de fond et les parois latérales étant configurées pour être rabattues sur la surface supérieure de la paroi de fond.

13. Corbeille pliable selon la revendication précédente, **caractérisée en ce que** le côté supérieur (8b) du cadre (8) de la paroi arrière est un peu plus court que le côté arrière (6b) du cadre (6) de la paroi de fond de manière à permettre au cadre de la paroi arrière de s'insérer dans le périmètre du cadre de la paroi de fond, et **en ce que** le côté supérieur (7b) du cadre (7) de la paroi avant (2) est légèrement plus court que le côté avant (6a) du cadre (6) de la paroi du fond de manière à permettre au cadre de la paroi avant de s'insérer dans le périmètre du cadre de la paroi de fond.

## Patentansprüche

1. Klappkorb aus Metalldraht, der eine Bodenwand (1), zwei Seitenwände (4, 5), eine Rückwand (3), eine Vorderwand (2) und Befestigungsmittel zur Verriegelung der Seitenwände an der Vorder- und Rückwand in aufgestellter Stellung umfasst, wobei jede der Wände einen Rahmen aus Metalldraht und ein Gitter umfasst, wobei die Vorder-, Rück- und Seitenwände schwenkbar an der Bodenwand montiert sind, wobei der Rahmen (6) der Bodenwand (1) auf jeder seiner vier Seiten an den Rahmen (7, 8, 9) der Seitenwände und der Vorderwand anhand von Schlaufen (10, 11) untrennbar befestigt ist, wobei die Befestigungsmittel aufgesetzte Verriegelungsteile (15) umfassen, wobei jedes der Verriegelungsteile einen ersten Befestigungsabschnitt (17) und einen zweiten Befestigungsabschnitt (18) umfasst, wobei der erste Befestigungsabschnitt einen Kanal (19) umfasst, der dazu bestimmt ist, auf einer Rahmenportion (7c, 7d, 8c, 8d) einer Wand und den Anti-Rotationsmitteln (28, 28') eingefädelt zu sein, und der zweite Befestigungsabschnitt (18) elastische Arme (21) umfasst, die konfiguriert sind, um eine Portion des Drahts des Rahmens der benachbarten Wand elastisch zu klemmen, wobei die zwei Befestigungsabschnitte einstückig verbunden sind, wobei der Korb **dadurch gekennzeichnet ist, dass** die Anti-Rotationsmittel entweder Erweiterungen (28) umfassen, die sich im Allgemeinen in Richtung der Achse (A1) des Kanals (19) im Verhältnis zu einem oberen Ende (30) des Kanals (19) hervorstehend erstrecken oder eine Erweiterung (28'), die mit dem ersten Befestigungsabschnitt (17') einstückig verbunden ist und einen dritten Befestigungsabschnitt (31) hat, der dazu bestimmt ist, auf einem Draht des Gitters (14) der Rück- und Vorderwand (2, 3) befestigt zu sein.

2. Klappkorb nach Anspruch 1, **dadurch gekennzeichnet, dass** das Verriegelungsteil ein Spritzteil aus Duroplastmaterial ist.

3. Klappkorb nach Anspruch 1 oder 2, **dadurch gekennzeichnet, dass** eine Innenfläche einer Wand, die den Kanal (19) des ersten Befestigungsabschnitts (17) bildet, Vorsprünge (25) umfasst, die konfiguriert sind, um bei der Montage auf einer Rahmenportion (7c, 7d, 8c, 8d) gequetscht zu werden.

4. Korb nach Anspruch 5, **dadurch gekennzeichnet, dass** die Erweiterung (28') anhand von Armen (32a, 32b) mit einer gewissen Elastizität mit dem ersten Befestigungsabschnitt (17') einstückig verbunden ist.

5. Korb nach Anspruch 5 oder 6, **dadurch gekennzeichnet, dass** der dritte Befestigungsabschnitt (31) elastische Arme (33a, 33b) umfasst, die konfiguriert sind, um einen Draht des Gitters elastisch zu klemmen.

6. Korb nach einem der vorangehenden Ansprüche, **dadurch gekennzeichnet, dass** der Korb an den seitlichen Seiten Unverwechselbarkeitselemente (6g) umfasst, die von einem transversalen Drahtsektor (6c) der Bodenwand gebildet werden, die sich zu einem unteren Draht (9b) der Seitenwand (4, 5) vertikal versetzt verlängern.

7. Klappkorb nach Anspruch 8, **dadurch gekennzeichnet, dass** sich die Unverwechselbarkeitselemente (6g) auch seitlich versetzt zur Seitenwand (4, 5) verlängern.

8. Klappkorb nach Anspruch 8 oder 9, **dadurch gekennzeichnet, dass** der versetzte transversale Drahtsektor (6g) eine Stelle für die Aufnahme von Verriegelungsteilen (15, 15', 15") in heruntergeklappter Stellung aufweist.

9. Klappkorb nach Anspruch 8, **dadurch gekennzeichnet, dass** die Drähte (9b) der Rahmen der Seitenwände (4, 5) einen entsprechenden Versatz (9g) umfassen, um sich an die Form der vertikalen Verlängerung des Drahtes der Bodenwand anzupassen.

10. Klappkorb nach vorangehendem Anspruch, **dadurch gekennzeichnet, dass** die Unverwechselbarkeitselemente (6g) eine erweiterte umgekehrte V-Form haben, um ein stabiles Stapeln mit einer bestimmten Positionierung der Klappkörbe zu erlauben.

11. Klappkorb nach einem der zwei vorangehenden Ansprüche, **dadurch gekennzeichnet, dass** die entsprechenden Versatze (9g) der Rahmen der Seitenwände einen transversalen Gitter-Drahtsektor (38) auf einer Seite umfassen, der konfiguriert ist, um mit dem Unverwechselbarkeitselement (6g) zu interferieren, um die Rotation der Seitenwand in aufgestellter Stellung zu stoppen.

12. Klappkorb nach einem der vorangehenden Ansprüche, **dadurch gekennzeichnet, dass** der Rahmen (6) der Bodenwand (1) auf jeder seiner vier Seiten Schlaufen (10, 11) in Form von U-förmigen Reitern aus Metalldraht aufweist, deren Enden mit dem Rahmen verschweißt sind, wobei sich die Reiter (10) auf der Vorder- (6a) und Rückseite (6b) des Rahmens in eine Richtung parallel zur Bodenwand erstrecken und sich die Reiter (11) auf den seitlichen Seiten (6c, 6d) des Rahmens in eine orthogonale Richtung zur Bodenwand erstrecken, wobei die Drähte (14) der Gitter der Vorder- (2) und Rückwand (3) mit den Rahmen (7, 8) auf ihren Innenflächen verschweißt sind und Drähte (13) des Gitters der Bodenwand (1) auf dem Rahmen der Bodenwand auf seiner oberen Fläche verschweißt ist, wobei die Vorder- und Rückwand konfiguriert sind, um auf die Innenfläche der Bodenwand heruntergeklappt zu sein und die Seitenwände konfiguriert sind, um auf die obere Fläche der Bodenwand heruntergeklappt zu sein.

13. Klappkorb nach vorangehendem Anspruch, **dadurch gekennzeichnet, dass** die Oberseite (8b) des Rahmens (8) der Rückwand etwas kürzer ist als die Rückseite (6b) des Rahmens (6) der Bodenwand, um dem Rahmen der Rückwand zu erlauben, sich in den Umfang des Rahmens der Bodenwand einzufügen, und dass die Oberseite (7b) des Rahmens (7) der Vorderwand (2) etwas kürzer ist als die Vorderseite (6a) des Rahmens (6) der Bodenwand, um dem Rahmen der Vorderwand zu erlauben, sich in den Umfang des Rahmens der Bodenwand einzufügen.

## Claims

1. Foldable metal wire basket comprising a bottom wall (1), two side walls (4, 5), a back wall (3), a front wall (2) and fastening means to lock the side walls to the front and back walls in mounted position, each of the walls comprising a metal wire frame and gridding, the front, back and side walls being pivot-mounted on the bottom wall, the frame (6) of the bottom wall (1) being inseparably attached on each of its four sides via pivots (10, 11) onto the frames (7, 8, 9) of the side and front walls, the attaching means comprising added-on locking parts (15), each of the locking parts comprising a first fastening part (17) and a second fastening part (18), the first fastening part comprising a channel (19) intended to be inserted over a portion of frame (7c, 7d, 8c, 8d) of a wall and anti-rotation means (28, 28'), and the second fastening part (18) comprising elastic arms (21) configured to elastically grip a portion of the frame wire of the adjacent wall, the two fastening parts being secured together, the said basket being **characterized in that** the anti-rotation means comprise either extensions (28) generally extending in the direction of the axis (A1) of the channel (19) and protruding from an upper end (30) of the channel (19), or an extension (28') secured to the first fastening part (17') and having a third fastening part (31) intended to be attached onto a wire of the gridding (14) of the back and front walls (2, 3).

2. The foldable basket according to claim 1, **characterized in that** the locking part is an injected part in thermosetting plastic material.

3. The foldable basket according to claim 1 or 2, **characterized in that** an inner surface of one wall forming the channel (19) of the first fastening part (17) comprises protuberances (25) configured to be flattened when mounting on a portion of frame (7c, 7d, 8c, 8d).

4. The basket according to claim 5 **characterized in that** the extension (28') is secured to the first fastening part (17') via arms (32a, 32b) having some elasticity.

5. The basket according to claim 5 or 6 **characterized in that** the third fastening part (31) comprises elastic arms (33a, 33b) configured elastically to grip a gridding wire.

6. The basket according to one of the preceding claims, **characterized in that** the basket comprises foolproof elements (6g) on side walls formed by a section of crosswire (6c) of the bottom wall, these extending vertically, offset from a bottom wire (9b) of the side wall (4, 5).

7. The foldable basket according to claim 8, **characterized in that** the foolproof elements (6g) also extend laterally, offset from the side wall (4, 5).

8. The foldable basket according to claim 8 or 9, **characterized in that** the offset section of crosswire (6g) has a space for housing locking parts (15, 15', 15") in folded-down position.

9. The foldable basket according to claim 8, **characterized in that** the wires (9b) of the frames of the side walls (4, 5) comprise a corresponding offset (9g) to conform to the shape of the vertical continuation of the wire of the bottom wall.

10. The foldable basket according to the preceding claim, **characterized in that** the foolproof elements (6g) are of flared, inverted V-shape to allow stable stacking with defined positioning of the folded baskets.

11. The foldable basket according to one of the two preceding claims, **characterized in that** the corresponding offsets (9g) of the frames of the side walls comprise a section of gridding crosswire (38) on a side configured to interfere with the foolproof element (6g) to stop rotation of the side wall in mounted position.

12. The foldable basket according to one of the preceding claims, **characterized in that** the frame (6) of the bottom wall (1) on each of its four sides comprises pivots (10, 11) in the form of U-shaped tabs in metal wire whose ends are welded to the frame, the tabs (10) on the front (6a) and back (6b) sides of the frame extending in a direction parallel to the bottom wall, and the tabs (11) on the side walls (6c, 6d) of the frame extending in a direction orthogonal to the bottom wall, the gridding wires (14) of the front (2) and back (3) walls being welded onto the frames (7, 8) on their inner surfaces, and gridding wires (13) of the bottom wall (1) being welded onto the frame of the bottom wall on its upper surface, the front and back walls being configured to be folded over the underside of the bottom wall and the side walls being configured to be folded over the upper surface of the bottom wall.

13. The foldable basket according to the preceding claim, **characterized in that** the upper side (8b) of the frame (8) of the back wall is slightly shorter than the back side (6b) of the frame (6) of the bottom wall to enable the frame of the back wall to be inserted within the perimeter of the frame of the bottom wall, and **in that** the upper side (7b) of the frame (7) of the front wall (2) is slightly shorter than the front side (6a) of the frame (6) of the bottom wall to enable the frame of the front wall to be inserted within the perimeter of the frame of the bottom wall.
